# EUROPÄISCHE PATENTSCHRIFT

(11) **EP 3 081 672 B1**
(45) Veröffentlichungstag und Bekanntmachung des Hinweises auf die Patenterteilung: **09.05.2018**
(21) Anmeldenummer: 15163453.2
(22) Anmeldetag: 14.04.2015
(51) Int. Cl.: C25D 1/10, B29C 33/42, B29C 33/30, B23P 15/24, B29C 41/18, B29L 31/30

(54) **VERFAHREN ZUR HERSTELLUNG EINES FORMWERKZEUGS FÜR DIE KUNSTSTOFFVERARBEITUNG**
METHOD FOR THE PREPARATION OF A MOULD FOR USE IN THE PROCESSING OF PLASTICS
PROCÉDÉ DE FABRICATION D'UN OUTIL DE FORMAGE POUR L'USINAGE DE MATIÈRE SYNTHÉTIQUE

(43) Veröffentlichungstag der Anmeldung: 19.10.2016
(73) Patentinhaber: SMP Deutschland GmbH, 79268 Bötzingen (DE)
(72) Erfinder: Johannböke, Eckhard, 79346 Endingen (DE); Wüstefeld, Thomas, 79235 Vogtsburg (DE)
(74) Vertreter: Westphal, Mussgnug & Partner Patentanwälte mbB

(56) Entgegenhaltungen:
- DE-U1- 20 009 030
- JP-A- H07 309 188
- JP-A- H10 128 775
- JP-A- 2002 067 047

## Beschreibung

Die Erfindung betrifft ein Verfahren zur Herstellung eines Formwerkzeugs für die Kunststoffverarbeitung.

Formwerkzeuge, beispielsweise Formhautwerkzeuge, spielen in der kunststoffverarbeitenden Industrie eine bedeutende Rolle. Mit ihnen können Gieß- oder Slushhäute hergestellt werden, die dann hinterschäumt und/oder auf Träger aufgebracht werden können, um Kunststoffformteile herzustellen, wie sie beispielsweise in der Automobilindustrie Verwendung finden, beispielsweise für KFZ-Innenverkleidungen.

Ein weit verbreitetes Verfahren zur Herstellung solcher Formwerkzeuge ist die Galvanoplastik, bei der die metallische Form elektrolytisch hergestellt wird. Allerdings ist es mit dieser Technik bislang kaum möglich, Formwerkzeuge herzustellen, mit denen Formhäute mit einer vorgegebenen Geometrie, insbesondere hinterschnittige Nuten, wie sie beispielsweise für die Integration von Lichtleitern in Oberflächen oder für das Abdecken des Übergangs zweifarbiger Slushhäute oder Folien mit einem Keder benötigt werden, produziert werden können. Beispiele für die Anwendung derartiger Formwerkzeuge offenbaren beispielsweise die DE10 2009 036 678 A1, die DE 10 2011 089 285 A1 oder die DE 100 62 825 A1.

Der Grund dafür ist, dass bei der Schaffung der Aufdickung, die das zur Bildung der Nut benötigte Anlageprofil bildet, am galvanoplastisch geformten Werkzeug rückseitig eine Art Kerbe entsteht, die zu einer lokalen Schwachstelle führt, die bei der Verwendung des Werkzeugs im Serienprozess der Produktion letztlich zu seiner mechanischen Zerstörung führt.

Aus der JP H10 128775 A ist ein Verfahren zur Fertigung eines Formwerkzeugs für die Haut eines Instrumentenpanels bekannt, bei dem das Formwerkzeug an ein Anlageprofil galvanoplastisch angeformt wird.

Aus der DE 200 09 030 U1 sind Formblockabschnitte zum Herstellen eines Kunststoffrohrs bekannt, bei denen die Formfläche Aufnahmen und Einsätze, die in den Aufnahmen austauschbar befestigt werden können, aufweist. Die JP H7 309188 A und die JP 2002067047 A offenbaren jeweils weitere Formwerkzeuge für die Kunststoffverarbeitung mit mindestens einem Anlageprofil sowie Verfahren zu deren Herstellung.

Dementsprechend besteht die Aufgabe der Erfindung darin, ein Verfahren zur Herstellung eines verbesserten Formwerkzeugs für die Kunststoffverarbeitung mit einem Anlageprofil bereitzustellen. Dabei besteht die Verbesserung insbesondere einerseits in einer Vergrößerung der Menge realisierbarer Anlageprofile, also der Erschließung von Formwerkzeugen mit neuen, bislang nicht realisierbaren Anlageprofilen und andererseits in einer Erhöhung der Lebensdauer bislang schon realisierbarer Anlageprofile.

Diese Aufgabe wird gelöst durch ein Verfahren zur Herstellung eines Formwerkzeugs für die Kunststoffverarbeitung mit einem Anlageprofil mit den Merkmalen des Anspruchs 1. Weiterbildungen der Erfindung sind Gegenstand der jeweiligen Unteransprüche. Ein Verfahren zur Herstellung eines Formwerkzeugs für die Kunststoffverarbeitung mit mindestens einem Anlageprofil weist zumindest die Schritte
- galvanoplastisches Herstellen eines Formwerkzeugs mit flachen, schmalen Rippen an den Stellen, an denen das fertige Formwerkzeug Anlageprofile aufweisen soll,
- Bereitstellen des mindestens einen Anlageprofils, und
- Befestigen des mindestens eine Anlageprofils an den flachen, schmalen Rippen
auf, von denen die beiden ersten in beliebiger Reihenfolge durchgeführt werden können.

Das galvanoplastische Herstellen des Formwerkzeugs erfolgt dabei in an sich bekannter, üblicher Weise. Im Gegensatz zur bekannten Herstellung von Formwerkzeugen, bei der Stege angeformt werden, die die Form des Anlageprofils aufweisen, wie z.B. die Haltestege mit Omega-förmigem Querschnitt bei den Formwerkzeugen gemäß der DE 10 2011 089 285 A1 oder der DE 10 2009 036 678 A1, werden jedoch lediglich flache, schmale Rippen an den Stellen angeformt, an denen das fertige Werkzeug die Anlageprofile aufweisen soll.

An diesen flachen, schmalen Rippen werden dann die Anlageprofile in einem weiteren Verfahrensschritt befestigt.

Als flache Rippen werden dabei solche angesehen, die etwa 0,5mm bis 3mm hoch die Formwerkzeugoberfläche, die bei Verwendung des Formwerkzeugs in Kontakt mit dem Kunststoff gelangt, überragen. Schmal ist eine Rippe, wenn sie eine Breite von ca. 0,5mm bis 5 mm hat. Bei einer solchen Dimensionierung der Rippe ist es möglich, Schwächungen des Formwerkzeugs an seiner der Rippe gegenüberliegenden Seite zu vermeiden, was die Lebensdauer des Werkzeugs im Serienprozess spürbar erhöht. Gleichzeitig gewinnt man die Möglichkeit, die Anlageprofile erheblich freier zu gestalten.

Besonders vorteilhaft ist es dabei, wenn Strangpressprofile als Anlageprofil bereitgestellt werden. Damit lassen sich unterschiedlichste Nutquerschnitte, insbesondere Omega-, Trapez- oder ähnliche Hinterschnitte, auf einfache und kostengünstige Weise realisieren.

Insbesondere in Fällen, in denen es auf einen wohldefinierten und festen Sitz ankommt, ist es bevorzugt, wenn Rippen hergestellt werden, von denen mindestens eine eine Führungsnut aufweist, wobei mindestens ein Anlageprofil bereitgestellt wird, das einen an die Geometrie der Führungsnut angepassten, vorspringenden Führungsabschnitt aufweist und/oder dass mindestens ein Anlageprofil bereitgestellt wird, das mindestens eine Führungsnut aufweist, wobei mindestens eine Rippe hergestellt wird, die einen an die Geometrie der Führungsnut angepassten, vorspringenden Führungsabschnitt aufweist. Die Führungsnuten können dabei beispielsweise eine Breite von 0,3 mm aufweisen und definieren gemeinsam mit den vorspringenden, an ihre Geometrie angepassten Führungsabschnitten eine exakte, passgenaue und sichere Anordnung der Anlageprofile.

Das Anlageprofil kann dabei auf unterschiedliche Weisen an den flachen, schmalen Rippen befestigt werden. Wird das Anlageprofil durch Anschweißen befestigt, können ein- oder beidseitig im Übergangsbereich zwischen Rippe und Anlageprofil Schweißraupen vorgesehen werden, wodurch dann auch unsaubere Kanten im Sichtbereich effektiv verhindert werden. Wird das Anlageprofil durch Verkleben befestigt, kann der Arbeitsaufwand gegenüber einem Anschweißen verringert werden. In Fällen, in denen die Verwendung eines geeigneten Klebstoffs unerwünschte Effekte in der jeweiligen Polymerchemie hervorrufen könnte, kann das Anlageprofil auch durch Verklemmen befestigt werden.

Die Erfindung wird nachfolgend anhand von Figuren näher erläutert. Es zeigen:
- Fig. 1:: Ein galvanoplastisch hergestelltes Formwerkzeug mit Anlagefläche gemäß Stand der Technik,
- Fig. 2:: ein erstes Ausführungsbeispiel für ein Formwerkzeug,
- Fig. 3:: ein zweites Ausführungsbeispiel für ein Formwerkzeug, und
- Fig. 4:: ein drittes Ausführungsbeispiel für ein Formwerkzeug.

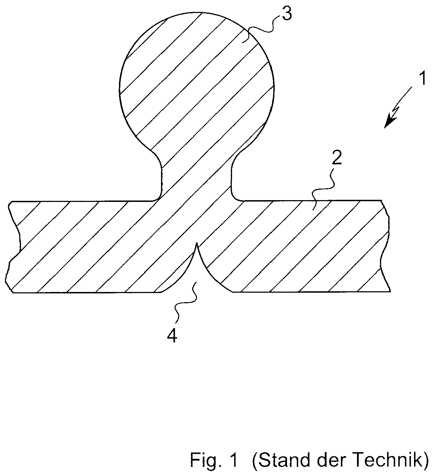

Figur 1 zeigt ein galvanoplastisch hergestelltes Formwerkzeug 1 für die Kunststoffverarbeitung gemäß dem Stand der Technik. Das Formwerkzeug 1 weist eine Formwerkzeugoberfläche 2 auf, die bei bestimmungsgemäßer Verwendung in Kontakt mit dem zu formenden Kunststoff steht. An dem Formwerkzeug 1 ist ein im Wesentlichen Omega-förmiges Anlageprofil 3 galvanoplastisch angeformt, was zu einer lokalen Schwachstelle 4 führt, die die Lebensdauer des Formwerkzeugs 1 reduziert.

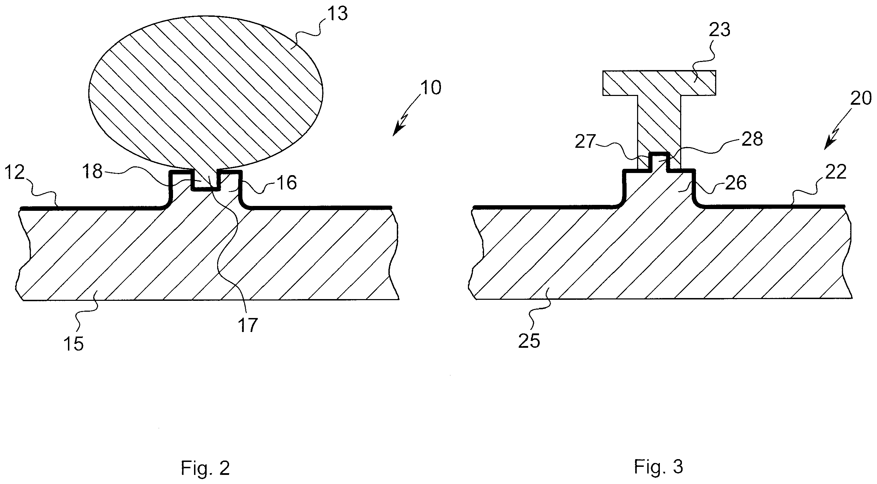

Figur 2 zeigt ein erstes Ausführungsbeispiel für ein Formwerkzeug 10, das ebenfalls ein im Wesentlichen Omega-förmiges Anlageprofil 13 und eine Formwerkzeugoberfläche 12 aufweist. Das Anlageprofil 13 ist dabei ein Strangpressprofil mit Führungsabschnitt 17, das an einer galvanoplastisch hergestellten Formwerkzeugbasis 15 galvanoplastisch angeformten flachen, schmalen Rippe 16 mit Führungsnut 18 durch Kleben befestigt ist.

Figur 3 zeigt ein zweites Ausführungsbeispiel für ein Formwerkzeug 20, das ein im Wesentlichen T-förmiges Anlageprofil 23 und eine Formwerkzeugoberfläche 22 aufweist. Das Anlageprofil 23 ist dabei ein Strangpressprofil mit Führungsnut 27, das an einer galvanoplastisch hergestellten Formwerkzeugbasis 25 galvanoplastisch angeformten flachen, schmalen Rippe 26 mit galvanoplastisch angeformtem Führungsabschnitt 28 durch Klemmen befestigt ist.

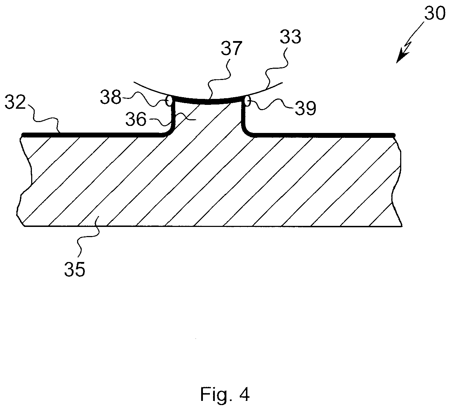

Figur 4 zeigt ein drittes Ausführungsbeispiel für ein Formwerkzeug 30, das ein im Wesentlichen bogenförmiges Anlageprofil 33 und eine Formwerkzeugoberfläche 32 aufweist. Das Anlageprofil 33 ist dabei ein Strangpressprofil, wobei die Oberseite 37 einer an eine galvanoplastisch hergestellten Formwerkzeugbasis 35 galvanoplastisch angeformten flachen, schmalen Rippe 36 an die Unterseite des bogenförmigen Anlageprofils 33 angepasst ist. Das Anlageprofil 33 ist an der flachen schmalen Rippe 36 festgeschweißt, wobei Schweißraupen 38,39 an den Schweißnähten entstehen, welche bei Verwendung des Formwerkzeugs 30 das Entstehen einer unsauberen Kante im Sichtbereich des hergestellten Kunststoffteils sicher verhindern.

### Bezugszeichenliste

- 1,10,20,30: Formwerkzeug
- 2,12,22,32: Formwerkzeugoberfläche
- 3,13,23,33: Anlageprofil
- 4: Schwachstelle
- 15,25,35: Formwerkzeugbasis
- 16,26,36: Rippe
- 17,28: Führungsabschnitt
- 18,27: Führungsnut
- 37: Oberseite
- 38,39: Schweißraupen

## Patentansprüche

1. Verfahren zur Herstellung eines Formwerkzeugs (10,20,30) für die Kunststoffverarbeitung mit mindestens einem Anlageprofil (13,23,33) mit den Schritten
- galvanoplastisches Herstellen eines vorläufigen Formwerkzeugs mit flachen, schmalen Rippen (16,26,36) an den Stellen, an denen das fertige Formwerkzeug (10,20,30) Anlageprofile aufweisen soll,
- Bereitstellen des mindestens einen Anlageprofils (13,23, 33), und
- Befestigen des mindestens einen Anlageprofils (13,23,33) an den flachen, schmalen Rippen (16,26,36), wobei eine Rippe als flach anzusehen ist, wenn sie 0,5 bis 3 mm hoch die Formwerkzeugoberfläche, die bei Verwendung des Formwerkzeugs in Kontakt mit dem Kunststoff gelangt, überragt und wobei eine Rippe schmal ist, wenn sie eine Breite von 0,5 mm bis 5 mm hat.

2. Verfahren nach Anspruch 1,
**dadurch gekennzeichnet, dass** ein Strangpressprofil als Anlageprofil (13,23,33) bereitgestellt wird.

3. Verfahren nach Anspruch 1 oder 2,
**dadurch gekennzeichnet, dass** Rippen (16) hergestellt werden, von denen mindestens eine eine Führungsnut (18)aufweist, wobei mindestens ein Anlageprofil (13) bereitgestellt wird, das einen an die Geometrie der Führungsnut (18) angepassten, vorspringenden Führungsabschnitt (17) aufweist und/oder dass mindestens ein Anlageprofil (23) bereitgestellt wird, das mindestens eine Führungsnut (27) aufweist, wobei mindestens eine Rippe (26) hergestellt wird, die einen an die Geometrie der Führungsnut angepassten, vorspringenden Führungsabschnitt (28) aufweist.

4. Verfahren nach einem der Ansprüche 1 bis 3,
**dadurch gekennzeichnet, dass** das Anlageprofil (13,23,33) durch Anschweißen befestigt wird.

5. Verfahren nach einem der Ansprüche 1 bis 3,
**dadurch gekennzeichnet, dass** das Anlageprofil (13,23,33) durch Verkleben befestigt wird.

6. Verfahren nach einem der Ansprüche 1 bis 3,
**dadurch gekennzeichnet, dass** das Anlageprofil (13,23,33) durch Verklemmen befestigt wird.

## Claims

1. Method for production of a moulding tool (10, 20, 30) for processing plastics, with at least one contact profile (13, 23, 33), with the steps:
- galvanoplastic production of a preliminary moulding tool with flat narrow ribs (16, 26, 36) at the points at which the finished moulding tool (10, 20, 30) will have a contact profile,
- provision of the at least one contact profile (13, 23, 33), and
- fixing of the at least one contact profile (13, 23, 33) to the flat narrow ribs (16, 26, 36), wherein a rib is regarded as flat if it protrudes 0.5 to 3 mm above the surface of the moulding tool which comes into contact with the plastic on use of the moulding tool, and wherein a rib is narrow if it has a width of 0.5 to 5 mm.

2. Method according to claim 1, **characterised in that** an extruded profile is provided as a contact profile (13, 23, 33).

3. Method according to claim 1 or 2, **characterised in that** ribs (16) are produced, at least one of which has a guide groove (18), wherein at least one contact profile (13) is provided which has a protruding guide portion (17) adapted to the geometry of the guide groove (18), and/or that at least one contact profile (23) is provided which has at least one guide groove (27), wherein at least one rib (26) is produced which has a protruding guide portion (28) adapted to the geometry of the guide groove.

4. Method according to any of claims 1 to 3, **characterised in that** the contact profile (13, 23, 33) is attached by welding.

5. Method according to any of claims 1 to 3, **characterised in that** the contact profile (13, 23, 33) is attached by gluing.

6. Method according to any of claims 1 to 3, **characterised in that** the contact profile (13, 23, 33) is attached by caulking.

## Revendications

1. Procédé de fabrication d'un outil de formage (10, 20, 30) destiné à l'usinage de matériau synthétique ayant au moins un profil de contact (13, 23, 33) comprenant des étapes consistant :
à fabriquer par galvanoplastie un outil de formage préalable ayant des petites nervures plates (16, 26, 36) aux endroits où l'outil de formage final (10, 20, 30) doit comporter des profils de contact :
- préparer le profil de contact (13, 23, 33),
- fixer le profil de contact (13, 23, 33) sur les petites nervures plates (16, 26, 36), une nervure étant considérée comme plate lorsqu'elle dépasse d'une hauteur de 0,5 à 3 mm la surface de l'outil de formage qui, lors de l'utilisation de cet outil vient en contact avec le matériau synthétique, et une nervure étant petite lorsqu'elle a une largeur de 0,5 mm à 5 mm.

2. Procédé conforme à la revendication 1,
**caractérisé en ce que**
l'on prépare un profil extrudé en tant que profil de contact (13, 23, 33).

3. Procédé conforme à la revendication 1 ou 2,
**caractérisé en ce que**
l'on fabrique des nervures (16) dont au moins l'une comporte une rainure de guidage (18), on prépare au moins un profil de contact (13) qui comporte un segment de guidage en saillie (17) adapté à la géométrie de la rainure de guidage (18), et/ou on prépare au moins un profil de contact (23) qui comporte au moins une rainure de guidage (27), et on fabrique au moins une nervure (26) qui comporte un segment de guidage en saillie (28) adapté à la géométrie de la rainure de guidage.

4. Procédé conforme à l'une des revendications 1 à 3,
**caractérisé en ce que**
le profil de contact (13, 23, 33) est fixé par soudage.

5. Procédé conforme à l'une des revendications 1 à 3,
**caractérisé en ce que**
le profil de contact (13, 23, 33) est fixé par collage.

6. Procédé conforme à l'une des revendications 1 à 3,
**caractérisé en ce que**
le profil de contact (13, 23, 33) est fixé par serrage.
